# EUROPEAN PATENT SPECIFICATION

(11) **EP 3 269 486 B1**
(45) Date of publication and mention of the grant of the patent: **20.04.2022**
(21) Application number: 16761739.8
(22) Date of filing: 08.03.2016
(51) Int. Cl.: B23K 9/00, B23K 1/00, B23K 1/18, B23K 3/00, B23K 9/167, B23K 9/23, B23K 37/04, B23K 37/047, B23K 101/12, B23K 103/12, B21D 51/18, B21D 51/24, B23K 3/08, B23K 37/053

(54) **CAN BODY PRODUCTION APPARATUS AND CAN BODY PRODUCTION METHOD**
VORRICHTUNG ZUR HERSTELLUNG EINES DOSENKÖRPERS SOWIE VERFAHREN ZUR HERSTELLUNG EINES DOSENKÖRPERS
APPAREIL DE PRODUCTION DE CORPS DE BOÎTE ET PROCÉDÉ DE PRODUCTION DE CORPS DE BOÎTE

(30) Priority: 12.03.2015 JP 2015048912
(43) Date of publication of application: 17.01.2018
(73) Proprietor: Mitsubishi Electric Corporation, Chiyoda-ku Tokyo 100-8310 (JP)
(72) Inventor: GOTO, Kenji, Tokyo 100-8310 (JP); OKA, Kohei, Tokyo 100-8310 (JP); MONODANE, Takeshi, Tokyo 100-8310 (JP); HISHINUMA, Shizuyuki, Tokyo 100-8310 (JP); MOTEGI, Hiromichi, Tokyo 100-8310 (JP); TAKEYAMA, Hidetoshi, Tokyo 100-8310 (JP)
(74) Representative: Sajda, Wolf E.
(86) International application number: PCT/JP2016/057090
(87) International publication number: WO 2016/143771

(56) References cited:
- JP-A- H 049 276
- JP-A- H0 938 742
- JP-A- 2001 070 180
- JP-A- 2011 121 076
- JP-A- 2011 121 076
- JP-A- 2012 228 718
- JP-A- 2012 228 718

## Description

### TECHNICAL FIELD

The present invention relates to a can body production apparatus and a can body production method using such apparatus, for producing a can body such as a hot water storage tank or the like which is produced by joining end plates and a trunk formed of a thin metallic member.

### BACKGROUND ART

A hot water storage type water heater, which has been popularized in recent years, includes a metallic large-capacity hot water storage tank for storing boiled water. Regarding the structure of a can body that is a hot water storage tank, generally, bowl-shaped components called end plates are welded to both end portions of a tubular main body component called a trunk over the entire periphery, whereby the can body is formed. Regarding the peripheral welding, joints having various shapes and welding methods including a can body production apparatus have hitherto been considered.

For extending the life of the can body, a butt joint having no gap at a welded part is desirably formed. Generally, in butt welding for thin plates, it is necessary to strictly manage a gap in a joint and displacement in a plate thickness direction (misalignment, that is, displacement between two plates in the thickness direction).

From this standpoint, a technique related to a can body production apparatus has been disclosed which is a can body production apparatus for fitting and welding an end plate to each opening end portion of a trunk, the can body production apparatus including: first and second correction jigs for supporting end plates installed at both sides of the trunk, respectively; a rotational drive unit disposed at the outer side of the first correction jig; and a pressure unit disposed at the outer side of the second correction jig.

In the conventional technique, by using correction rings of the first and second correction jigs, the rear surfaces of raised portions at openings of the end plates are brought into contact with bottom portions of stepped portions of the correction rings thereby to correct the accuracy of supporting the end plates, the front surfaces of raised portions at both ends of the trunk and the front surfaces of the raised portions at the openings of the end plates are butted against each other by a pressing force of the pressure unit, the correction rings are moved by guide units of the respective correction jigs, and the bottom portions of the stepped portions are separated from the rear surfaces of the raised portions at the openings of the end plates thereby to form spaces above butted parts. Thereafter, the trunk, the end plates, and the first and second correction jigs are integrally rotatable by the rotational drive unit (for example, see Patent Document 1).

### CITATION LIST

### PATENT DOCUMENT

Patent Document 1: Japanese Laid-Open Patent Publication JP 2012-228 718 A (basis for the preamble of claims 1 and 3, respectively)

### SUMMARY OF THE INVENTION

### PROBLEMS TO BE SOLVED BY THE INVENTION

In the technique disclosed in Patent Document 1 described above, the front surface of each raised portion of the trunk and the front surface of the raised portion at the opening of each end plate are butted against each other through pressing with a force generated by the pressure unit at a set position after each correction jig is moved to the set position, that is, through position control of the correction jigs.

In pressing force control performed in this position control, generally, for example, a load factor of a motor which is a drive source for the pressure unit is monitored, and a pressing force is obtained.

However, when: a load at the time of activation of the pressure unit is high; frictional resistance between each correction jig, and the trunk and each end plate is high; and further flatness of the front surface of each raised portion of the trunk and flatness of the front surface of the raised portion at the opening of each end plate are not ensured, that is, wobbling at the surfaces is great, a case arises in which the pressing force control based on the load factor of the motor cannot always be performed with high accuracy.

In addition, when the overall length of the trunk and the overall length of each end plate are longer than predetermined values, there is a possibility of occurrence of a case where the pressing force becomes greater than a predetermined value depending on the set position of each correction jig, so that the butted part may be deformed or crushed.

The present invention has been made to solve the above-described problem, and an object of the present invention is to provide a can body production apparatus and a can body production method which allow a butted part between a trunk and each end plate to be assuredly brought into close contact to achieve stable welding quality.

### SOLUTION TO THE PROBLEMS

A can body production apparatus of the present invention is defined in claim 1.

A can body production method of the present invention is defined in claim 3.

Further embodiments of the present invention are defined in the dependent claims.

### EFFECT OF THE INVENTION

According to the can body production apparatus of the present invention, stable butted parts can assuredly be obtained.

In addition, according to the can body production method using the above-described can body production apparatus of the present invention, process omission, energy saving, and cost reduction can be achieved.

### BRIEF DESCRIPTION OF THE DRAWINGS

- FIG. 1: is a schematic explanatory diagram of a water heater in which a can body according to Embodiment 1 is used.
- FIG. 2: is a diagram showing a can body production apparatus according to Embodiment 1.
- FIG. 3: is a schematic diagram showing a second correction jig according to Embodiment 1.
- FIG. 4: is a diagram showing a state where an end plate is attached to the second correction jig according to Embodiment 1.
- FIG. 5: is a diagram showing a state where the end plate and a trunk are attached to the second correction jig according to Embodiment 1.
- FIG. 6: is a flowchart of a can body production method in the can body production apparatus according to Embodiment 1.
- FIG. 7: is a flowchart of the can body production method in the can body production apparatus according to Embodiment 1.
- FIG. 8: is a diagram showing a state where the trunk and the end plate according to Embodiment 1 are butted against each other.
- FIG. 9: is a diagram illustrating a pressing operation according to Embodiment 1.
- FIG. 10: is a diagram showing a state where a welding torch according to Embodiment 2 is placed.
- FIG. 11: is a diagram illustrating a state of distortion of a trunk in a can body production method according to Embodiment 3.
- FIG. 12: is a flowchart of the can body production method in a can body production apparatus according to Embodiment 3.
- FIG. 13: is a diagram showing a state where an end plate is attached to a second correction jig according to Embodiment 3.
- FIG. 14: is a diagram showing a state where the end plate and a trunk are attached to the second correction jig according to Embodiment 3.

### DESCRIPTION OF EMBODIMENTS

### Embodiment 1

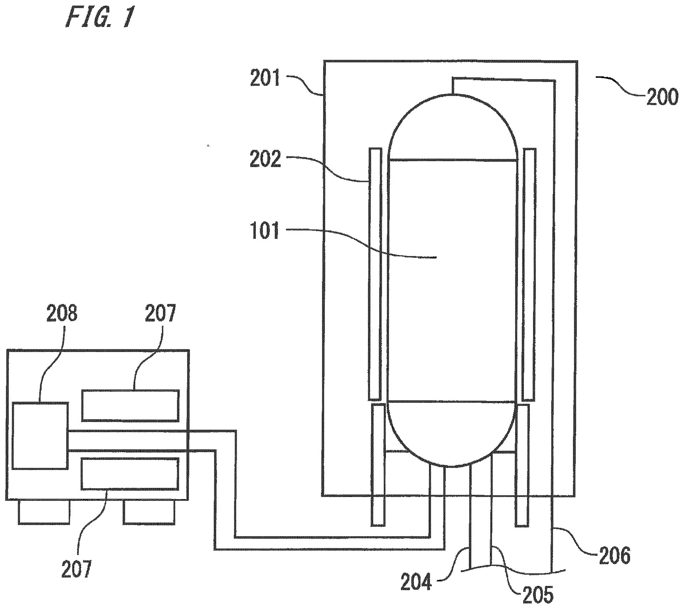

Hereinafter, Embodiment 1 of the present invention will be described with reference to the drawings. A can body 101 according to Embodiment 1 is used as a metallic hot water storage tank of a water heater or the like. The structure of the water heater will be described with reference to FIG. 1.

A water heater 200 includes: an electric heater 207; a can body 101 which stores hot water; and a pump 208 which forms a pump unit. The can body 101 described in Embodiment 1 is a metallic tank which stores hot water. The can body 101 has a water supply port 204 and a water drain port 205 at a lower portion thereof and has a hot water supply port 206 at an upper portion thereof. A heat insulator 202 such as foamed polystyrene is wound on the can body 101. The can body 101 and the heat insulator 202 are housed within a housing 201. The electric heater 207 which is a heating element is mounted on the pump unit.

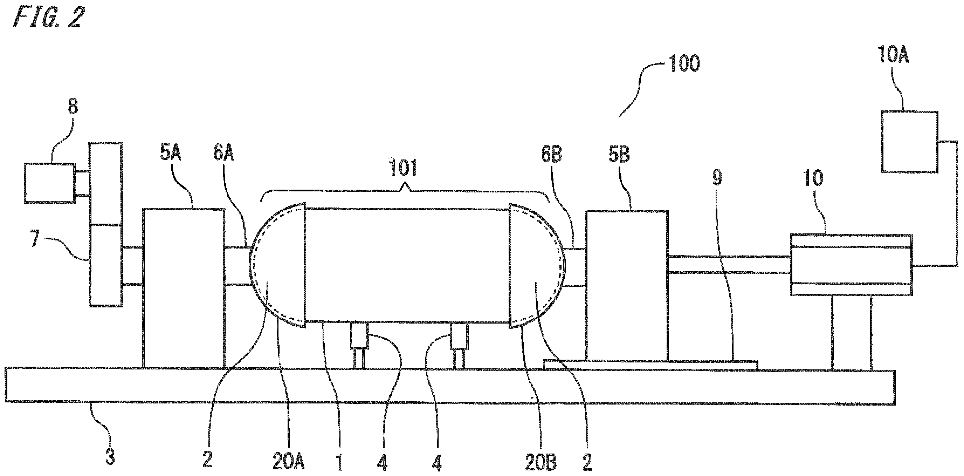

FIG. 2 is a diagram showing the can body 101 mounted on a can body production apparatus 100 according to Embodiment 1. The can body 101 includes a cylindrical trunk 1 and bowl-shaped end plates 2 provided at both ends of the trunk 1, respectively. The outer diameters of the trunk 1 and the end plates 2 are 300 mm to 700 mm, and the material used for the trunk 1 and the end plates 2 is a ferritic stainless steel material, and the plate thicknesses of the trunk 1 and the end plates 2 are 0.5 mm to 1.5 mm. The overall length of the can body 101 including the trunk 1 and the end plates 2 at both sides is approximately 500 mm to 2000 mm.

Next, the can body production apparatus 100 will be described. The can body 101 is supported through trunk receivers 4 installed on a base 3 as shown in FIG. 2. A first correction jig 20A and a second correction jig 20B are provided at the outer sides of the respective end plates 2 disposed at both sides of the trunk 1. A rotational drive unit 5A is disposed on the base 3. The rotational drive unit 5A is connected to a motor 8 via a shaft 6A and a gear 7 at the outer side of the first correction jig 20A. The rotational drive unit 5A rotates by the motor 8, and accordingly, the can body 101 rotates via the first correction jig 20A.

A rotation following unit 5B is connected to the outer side of the second correction jig 20B via a shaft 6B. The rotation following unit 5B is installed on the base 3 via a slide rail 9. The rotation following unit 5B is connected to a pressure unit 10. The pressure unit 10 is installed on the base 3. The pressure unit 10 is provided with a control portion 10A which controls operation. When the pressure unit 10 operates, the rotation following unit 5B and the second correction jig 20B move leftward in FIG. 2 to press the can body 101. This operation will be described in detail later.

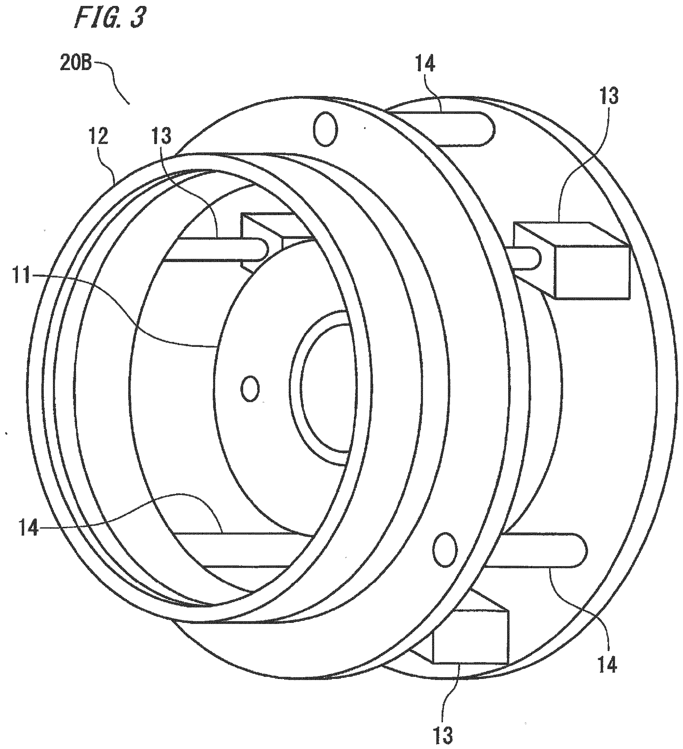

The configurations and operations of the first correction jig 20A connected to the rotational drive unit 5A and the second correction jig 20B connected to the pressure unit 10 will be described with reference to FIGS. 3 to 5. FIG. 3 shows the second correction jig 20B. It is noted that the first correction jig 20A has the same configuration as the second correction jig 20B except that the orientation thereof is different from that of the second correction jig 20B.

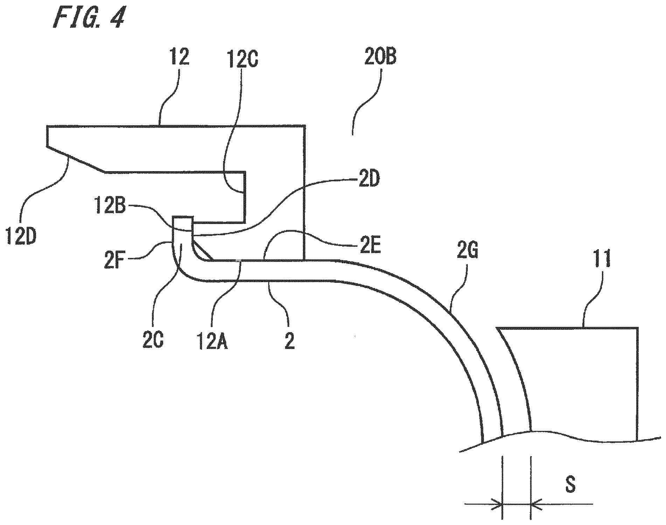

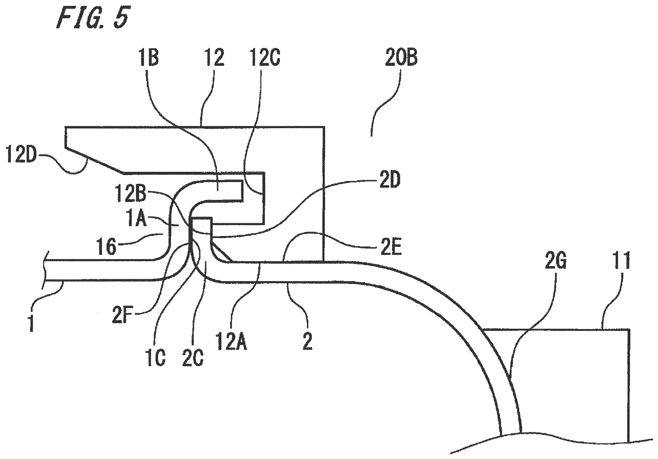

FIG. 4 is a diagram showing a state where a gap S is present between the end plate 2 and a bottom plate 11 of the second correction jig 20B. That is, FIG. 4 shows a state prior to pressing the can body 101 by the pressure unit 10 described later. FIG. 5 is a diagram showing a step which proceeds from the state in FIG. 4. FIG. 5 shows a state where the end plate 2, the second correction jig 20B, and the trunk 1 are combined with each other.

As shown in FIGS. 4 and 5, the second correction jig 20B is installed so as to cover the end plate 2. The second correction jig 20B includes the bottom plate 11 and a correction ring 12. The bottom plate 11 serves to receive a bottom surface 2G of the end plate 2. The correction ring 12 serves to come into contact with an erection portion rear surface 2D of an erection portion 2C provided at an opening of the end plate 2 and an end plate lateral surface 2E of the end plate 2.

The position of the correction ring 12 is set to a position at which the above-described gap S of approximately 1 to 2 mm is provided between the bottom surface 2G and the bottom plate 11 of the second correction jig 20B, in order to assuredly bring the erection portion rear surface 2D and the end plate lateral surface 2E of the end plate 2 into contact with the correction ring 12. In addition, the correction ring 12 is configured such that a lateral surface 12A thereof is brought into contact with the end plate lateral surface 2E. The central axis of the end plate 2 can be positioned on the central axis of the second correction jig 20B.

In the state shown in FIG. 5, a lower surface 12B of a stepped portion 12C of the correction ring 12 and the erection portion rear surface 2D of the end plate 2 are in contact with each other. Furthermore, the lateral surface 12A of the correction ring 12 and the end plate lateral surface 2E are in contact with each other. Accordingly, an erection portion 1A of the trunk 1 and the erection portion 2C of the end plate 2 form a butted part 16. The butted part 16 maintains the flatness of a joint surface which is an important factor for joining.

A guiding tapered portion 12D is formed in the stepped portion 12C provided in the horizontal direction and at the inner diameter side of the correction ring 12, such that the erection portion 1A of the trunk 1 is easily inserted thereinto. Thus, the trunk 1 is positioned on the central axis of the second correction jig 20B. In addition, the erection portion 1A provided at each of both ends of the trunk 1 includes an eave portion 1B extending from an upper portion thereof. Thus, the erection portion 1A has a Z cross-sectional shape.

Accordingly, the stepped portion 12C having an angular C cross-sectional shape is provided in the correction ring 12 such that the eave portion 1B does not come into contact with the correction ring 12 when the end plate 2 and the trunk 1 are fitted to each other. Therefore, the erection portion rear surface 2D of the end plate 2 comes into contact with the lower surface 12B of the correction ring 12.

As shown in FIG. 3, cylinders 13 and guides 14 which move the correction ring 12 in the horizontal direction away from the trunk 1 on the basis of a signal from the control portion 10A, are provided to the second correction jig 20B.

As shown in FIG. 4, a contact surface of the bottom plate 11 which receives the bottom surface 2G of the end plate 2 is a portion which receives a pressing force outputted by the pressure unit 10 and presses the end plate 2 and the trunk 1. Thus, the contact surface of the bottom plate 11 has a shape corresponding to the curved surface shape of the end plate 2 and also has a sufficient area.

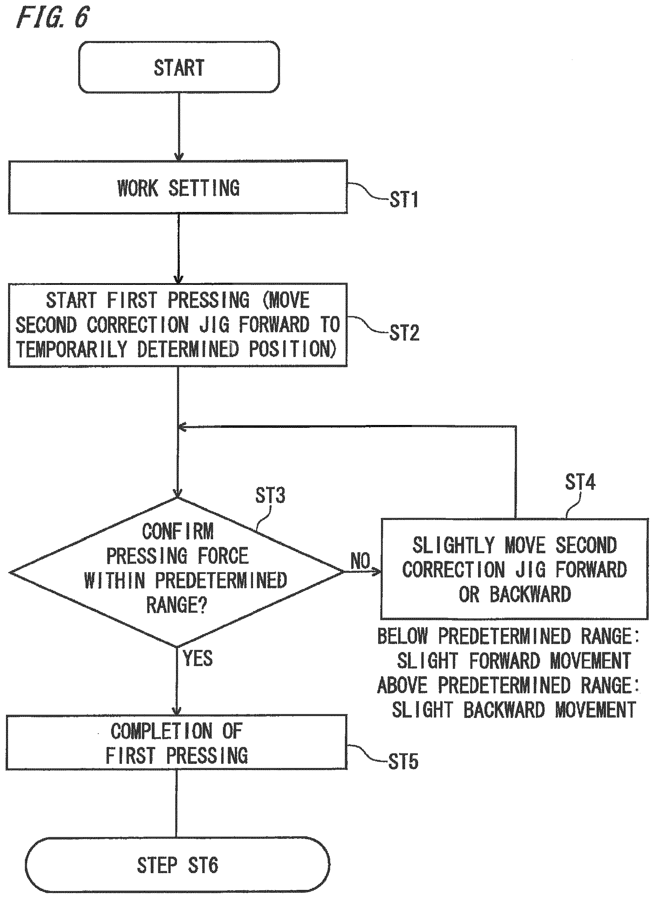

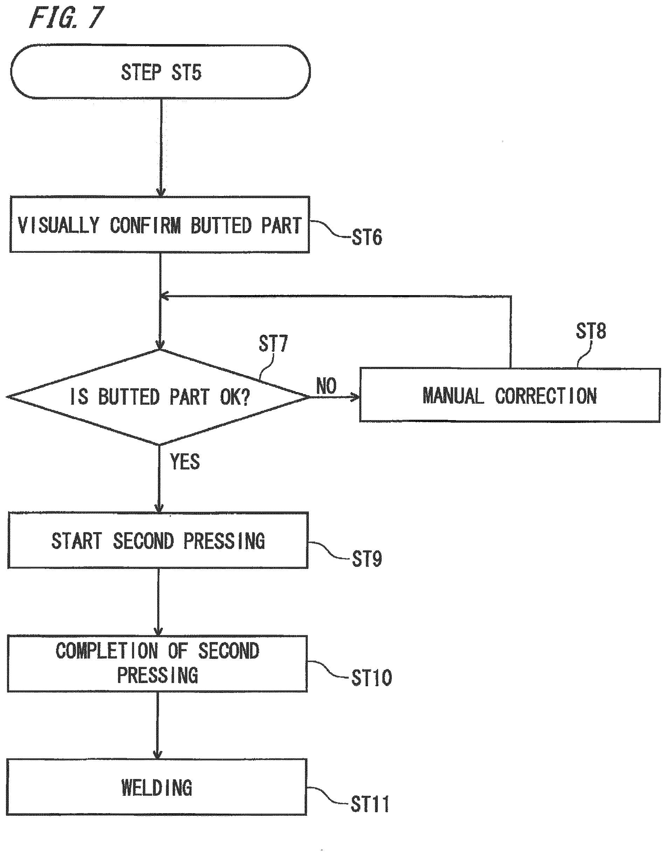

Next, a can body production method in the can body production apparatus 100 will be described with reference to flowcharts shown in FIGS. 6 and 7. First, the overall length of the trunk 1 has variations on the basis of various factors in production. Thus, the second correction jig 20B and the correction ring 12 are set in advance at positions that allow the trunk 1 to be carried in or out without any problem even when the overall length of the trunk 1 is the largest.

Next, as shown in FIG. 4, the position of the correction ring 12 is adjusted such that the gap S of approximately 1 mm is present between the bottom surface 2G of the end plate 2 and the bottom plate 11 of the second correction jig 20B. Then, the erection portion rear surface 2D of the end plate 2 is set so as to be entirely in contact with the lower surface 12B of the correction ring 12 (step ST1 in FIG. 6).

Because of this entire contact, flatness of the butted part 16 formed by the erection portion 1A and the erection portion 2C of the end plate 2 when the trunk 1 is set as shown in FIG. 5, is ensured. Ensuing the flatness is an important factor in the case of performing joining by means of, for example, welding in a later step.

Next, the pressure unit 10 is activated to start fist pressing. Then, the second correction jig 20B is moved forward until a state is obtained in which the bottom plate 11 and the bottom surface 2G of the end plate 2 are in contact with each other such that the gap S shown in FIG. 4 is eliminated, that is, the second correction jig 20B is moved forward to a temporarily determined position (step ST2 in FIG. 6).

Next, in the first pressing, the control portion 10A: monitors the position of the second correction jig 20B moving forward, and the pressing force applied to the butted part 16 via the correction ring 12 of the second correction jig 20B; confirms the pressing force; and determines whether the pressing force falls within a predetermined pressing force range (step ST3 in FIG. 6).

Then, if the pressing force is out of the predetermined pressing force range (NO), the first pressing is performed by adjustment control of the pressing force in which the position of the second correction jig 20B is adjusted on the basis of an instruction from the control portion 10A (step ST4 in FIG. 6). That is, if the pressing force is below the set range, the second correction jig 20B is slightly moved forward. In addition, if the pressing force is above the set range, the second correction jig 20B is slightly moved backward.

After such adjustment is performed, it is determined that the pressing force falls within the predetermined pressing force range (YES). Then, the first pressing is completed (step ST5 in FIG. 6). The pressure unit 10 is provided with a drive mechanism such as a servomotor which is not shown. Thus, this pressing force adjustment control is performed by the control portion 10A inputting load torque information of the servomotor and information about a position to which the second correction jig 20B is to be moved.

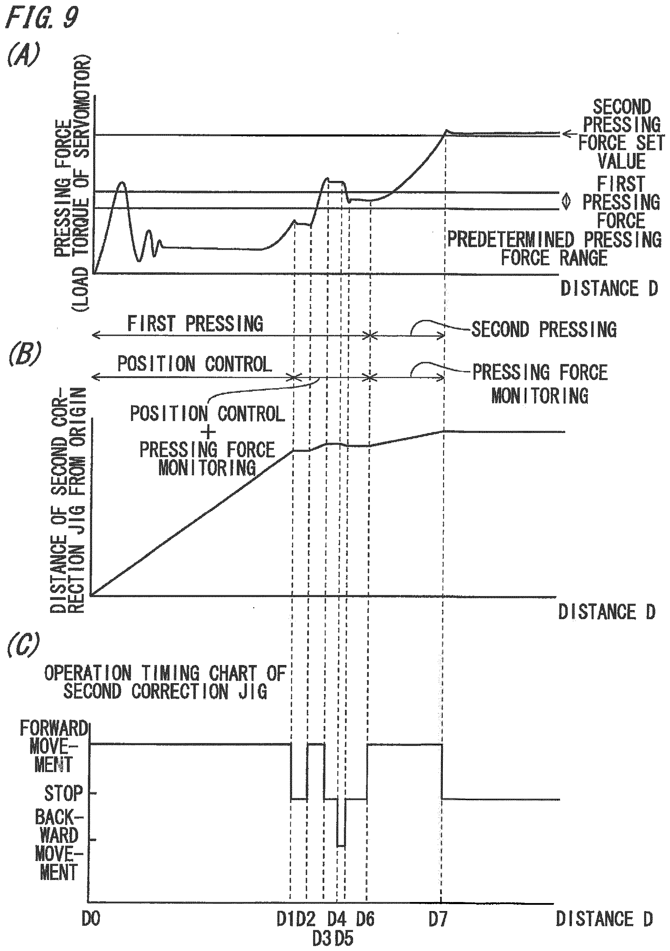

An operation of the first pressing until reaching the temporarily determined position will be described in detail with reference to a pressing operation diagram in FIG. 9.

Position control of the second correction jig 20B is performed in the range from an origin D0 at pressing operation start shown in FIG. 9 to a distance D1, and the position control and control based on pressing force monitoring (load torque monitoring) are performed in the range from the distance D1 to a distance D6.

The overall length of the trunk 1 has variations of approximately 1 mm due to various factors in production. Thus, in the first pressing, the second correction jig 20B is moved forward to a preset position in the case where the trunk 1 is the longest, that is, to the temporarily determined position, and then is stopped. In this state, the control portion 10A monitors the pressing force by the first pressing, and confirms whether the pressing force falls within the predetermined pressing force range, for example, 20 to 30 kgf.

If the pressing force is out of the range, the control portion 10A repeatedly performs position adjustment by outputting a command signal for slight forward/backward movement by, for example, approximately 0.1 mm, to the pressure unit 10, until the pressing force falls within the predetermined pressing force range. The number of times of this repeated confirmation operation is measured by the control portion 10A. If the number of times of the repeated confirmation operation exceeds a predetermined number of times, the control portion 10A displays a warning. Accordingly, occurrence of an abnormality in the first pressing, including the overall length of the trunk 1 being abnormal, is detected. The amount of slight forward/backward movement is settable to an arbitrary value.

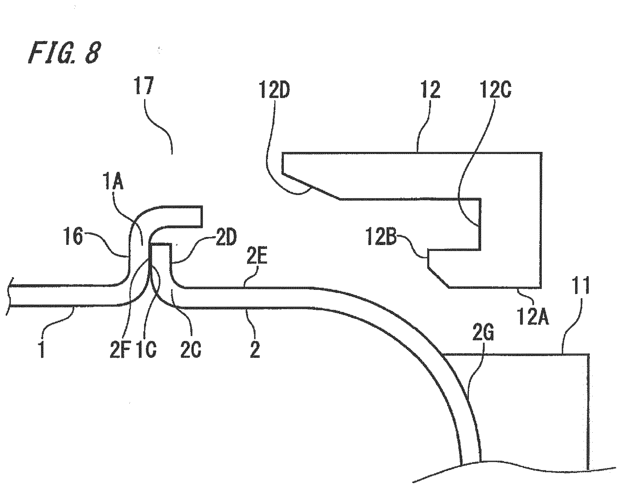

Next, the control portion 10A that has confirmed that the pressing force falls within the predetermined range outputs a signal to the second correction jig 20B, and moves the correction ring 12 in the direction away from the trunk 1 as shown in FIG. 8 by operation of the cylinders 13. As a result, a space 17 is formed above the butted part 16. At this time, the trunk receivers 4 shown in FIG. 2 move downward. However, the trunk 1 and the end plates 2 supported by the first correction jig 20A and the second correction jig 20B are integrated with each other by the first pressing force, and thus do not fall onto the base 3 even when the trunk receivers 4 move downward.

In this state, the rotational drive unit 5A operates to rotate the end plates 2 and the trunk 1 that have been integrated with each other. An operator visually confirms whether the butted part 16 has properly been formed, through the space 17 (step ST6 in FIG. 7). Next, the operator determines whether the butted part is proper (step ST7 in FIG. 7). If the butted part is not proper (NO), the butter portion is corrected by the operator (step ST8 in FIG. 7).

Since the pressing force in the first pressing is approximately 20 to 30 kgf as described above, deformation of the erection portion 1A of the trunk 1 is prevented. In addition, in the process of this first pressing, the erection portion 1A moves along the guiding tapered portion 12D of the correction ring 12. Then, an erection portion front surface 2F of the end plate 2 and an erection portion front surface 1C of the trunk 1 are butted against each other to form the butted part 16. At this time, even when the trunk 1 is inserted into the stepped portion 12C at a tilt, since the erection portion 2C of the end plate 2 is received by the correction ring 12, the accuracy of supporting the trunk 1 can be corrected by the first pressing, so that the butted part 16 can be formed over the entire surface.

Next, the pressure unit 10 operates on the basis of a signal from the control portion 10A, and second pressing is started in the range from the distance D6 to a distance D7 shown in FIG. 9 (step ST9 in FIG. 7). The second pressing is controlled by monitoring the load torque of the servomotor. Then, the second correction jig 20B is moved at a low speed. Therefore, an extra load that occurs due to friction or the like caused with the position movement (corresponding to noise for position information) can be almost neglected. Thus, it is possible to almost exactly recognize the load torque of the servomotor caused by the second pressing.

Until reaching the distance (position) D7 at which the pressing force by the second pressing is a predetermined value, for example, 100 kgf, the pressure unit 10 presses the second correction jig 20B to complete the second pressing (step ST10 in FIG. 7). During the second pressing, no change occurs in the contact state of the butted part 16 between the trunk 1 and the end plate 2, and the contact pressure properly increases.

Change and maintenance of the first pressing and the second pressing based on above-described adjustment control, by the control portion 10A, of the pressing force which presses the butted part 16 via the second correction jig 20B, will be described in detail with reference to FIG. 9. FIG. 9(A) is a diagram wherein the horizontal axis indicates a position with the position of the second correction jig 20B at the time of work setting (step ST1) in FIG. 6 being set at the origin (D0), and the vertical axis indicates the pressing force (the load torque of the servomotor).

The first pressing is performed by position control in the range from the origin D0 to the distance D1 and position control and control based on pressing force monitoring (load torque monitoring) in the range from the distance D1 to the distance D6. The second pressing is performed by control based on pressing force monitoring (load torque monitoring) in the range from the distance D6 to the distance D7. FIG. 9(B) shows the moving distance of the second correction jig 20B. FIG. 9(C) shows an operation timing chart of the second correction jig 20B.

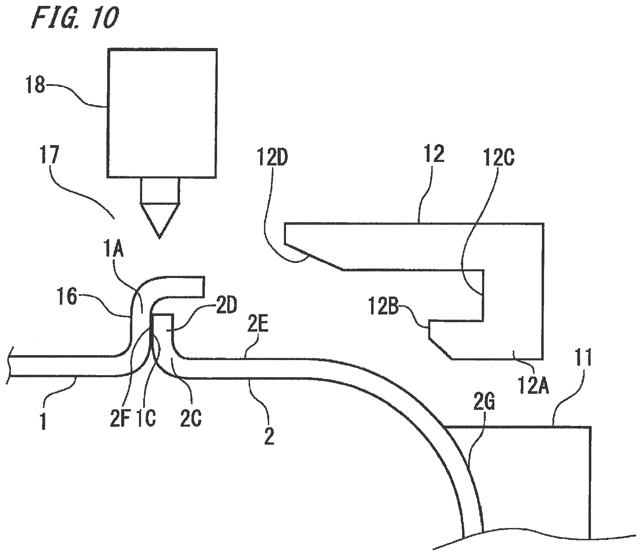

As described above, pressing the can body 101 is completed by the first pressing and the second pressing. Next, in the pressed state, the correction ring 12 is moved from above the butted part 16 thereby to form the space 17 above the butted part 16 as shown in FIG. 10. Next, for example, a welding torch 18 for TIG (tungsten inert gas) welding is placed. The welding is performed over the entirety of the circumferential butted part 16 at the trunk 1 and the end plate 2 that have been integrated with each other by the pressing (step ST11 in FIG. 7).

As described above, according to Embodiment 1, the control portion 10A monitors the load torque of the motor of the pressure unit 10, and presses the butted part 16 through the first pressing within the predetermined pressing force range by controlling the position of the second correction jig 20B. Thereafter, the control portion 10A moves the correction ring 12 to form the space 17 above the butted part 16, and then presses the butted part 16 through the second pressing within the predetermined pressing force range while monitoring the load torque of the motor.

Thus, even when the length of the trunk 1 is varied, the pressing force can be assuredly applied to the butted part 16 without deforming or crushing the erection portion 1A of the trunk 1 and the erection portion 2C of the end plate 2, whereby a stable welding quality is achieved. In addition, the production process is standardized, and thus process omission and energy saving are achieved, resulting in cost reduction and facilitation of the welding work, so that an effect of providing an apparatus suitable for mass production is achieved.

Moreover, the pressing force of the first pressing is smaller than the pressing force of the second pressing, and the formation of the butted part in the first pressing can be performed with the small pressing force, so that deformation, crush, or the like can be assuredly prevented.

### Embodiment 2

Embodiment 2 relates to a can body production method using the can body production apparatus 100 according to Embodiment 1 described above. The can body production method will be described with reference to the drawings described in Embodiment 1. In FIG. 2, the can body 101 is a hot water storage tank of a hot water storage type water heater for which a ferritic stainless steel material is used. The trunk 1, the end plates 2, the first correction jig 20A, and the second correction jig 20B are integrated with each other through pressing by the can body production apparatus 100 as described in Embodiment 1.

Thereafter, the butted part 16 between the erection portion 1A of the trunk 1 and the erection portion 2C of the end plate 2 is joined by using the welding torch 18. FIG. 10 shows a state where the welding torch 18 which is a joining tool is placed in the space 17 above the butted part 16.

In this state, the rotational drive unit 5A is activated by operation of the motor 8 to rotate the pressed and integrated trunk 1, the end plates 2 provided at both ends of the trunk 1, the first correction jig 20A, and the second correction jig 20B, and TIG welding is performed over the entire periphery of the butted part 16.

The can body 101 can be produced by the can body production method of Embodiment 2 described above. Thus, as a matter of course, the same advantageous effects as those in Embodiment 1 described above are achieved. In addition, since the rotational drive unit 5A is activated to rotate the pressed and integrated trunk 1, the end plates 2 provided at both ends of the trunk 1, the first correction jig 20A, and the second correction jig 20B, and welding is performed over the entire periphery of the butted part 16, welding for temporarily fixing the butted part 16 becomes unnecessary, and occurrence of a gap in the butted part 16 during welding can be prevented. In addition, since misalignment can be reduced, an extra dedicated tool is not required during the welding work, an extra process is eliminated, and stable welding having an enhanced effect of heat input can be performed.

Furthermore, since the TIG welding torch can be placed in the sufficient space 17, the can body 101 having high dimensional accuracy is obtained. Moreover, a product that does not cause gap corrosion and stress concentration in a welded part and has improved durability and long life can be produced as a product in which a welded part is formed through complete melting and a temperature cycle is applied at a high temperature as in a hot water storage tank.

Although the case where the material of the can body 101 is a ferritic stainless steel material has been described above in Embodiment 2, the material of the can body 101 is not limited thereto, and may be an austenitic stainless steel material or may be copper or a copper alloy. As a joining method in the case with copper or a copper alloy, a brazing method of joining the butted part 16 by means of replaced brazing or face-fed brazing may be adopted. In this case, the brazing filler material is desirably hard solder such as silver solder but is not limited thereto. Furthermore, for joining copper or a copper alloy, a welding method such as MIG welding (metal inert gas welding) may be adopted.

### Embodiment 3

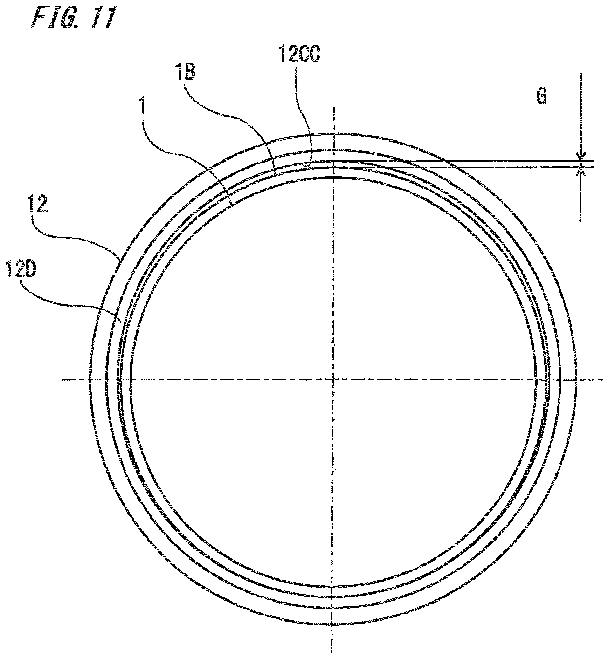

Embodiment 3 relates to a can body production method using the can body production apparatus 100 of Embodiment 1 described above. The can body production method of Embodiment 3 will be described with reference to the drawings described above in Embodiment 1 and FIGS. 11 to 14.

In Embodiment 3, a method for reducing a probability that a distal end 1BB of the eave portion 1B of the erection portion 1A of the trunk 1 and the erection portion 2C of the end plate 2 will partially come into contact with each other during the first pressing, will be described.

During the first pressing, the pressure unit 10 is moved forward to insert the erection portion 1A of the trunk 1 into the correction ring 12. Meanwhile, when the trunk 1 is set onto the trunk receivers 4, the shape of the trunk 1 bends due to its own weight under influence of gravity and the trunk 1 deforms into an elliptical shape.

This is because the trunk 1 is formed from a material having a small plate thickness, and the periphery of the trunk 1 is not held. Then, in a state where the trunk 1 has deformed into an elliptical shape, the erection portion 1A of the trunk 1 is inserted into the correction ring 12 that is moving forward together with the pressure unit 10.

Therefore, a gap G between an outer peripheral side lateral surface 12CC of the stepped portion 12C of the correction ring 12 and the outer diameter of the eave portion 1B of the erection portion 1A of the trunk 1 occurs so as to be large at the upper side against gravity.

FIG. 11 shows a schematic diagram of a state where the gap G between the outer peripheral side lateral surface 12CC of the stepped portion 12C of the correction ring 12 and the outer diameter of the eave portion 1B of the erection portion 1A of the trunk 1 has occurred so as to be uneven and large at the upper side.

A case is conceivable in which if the first pressing is performed in the state where the gap G between the outer peripheral side lateral surface 12CC of the stepped portion 12C of the correction ring 12 and the outer diameter of the eave portion 1B of the erection portion 1A of the trunk 1 is uneven at the upper side, the distal end 1BB of the eave portion 1B of the erection portion 1A of the trunk 1 and the erection portion 2C of the end plate 2 partially come into contact with each other.

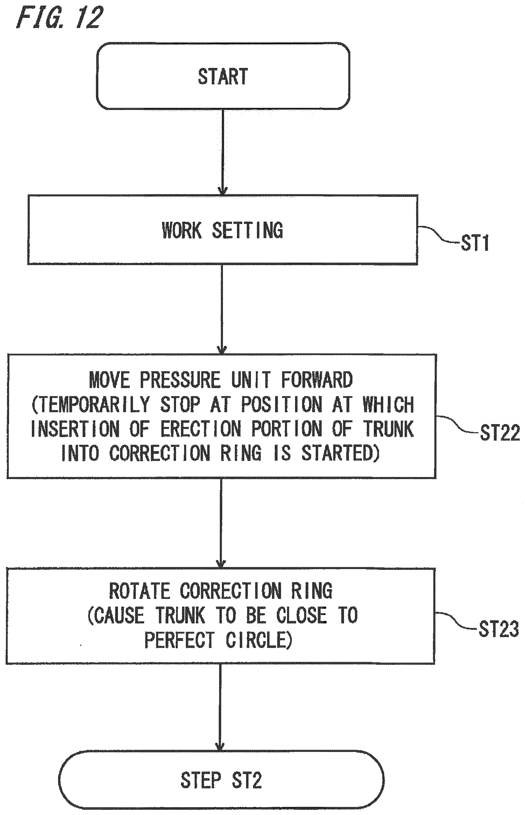

The can body production method of Embodiment 3 for solving this will be described. First, similarly to each embodiment described above, the end plates 2 are set at the first correction jig 20A and the second correction jig 20B, and the trunk 1 is subsequently set onto the trunk receivers 4. Then, the erection portion rear surface 2D of each end plate 2 is set so as to be entirely in contact with the lower surface 12B of the correction ring 12 (step ST1 in FIG. 12).

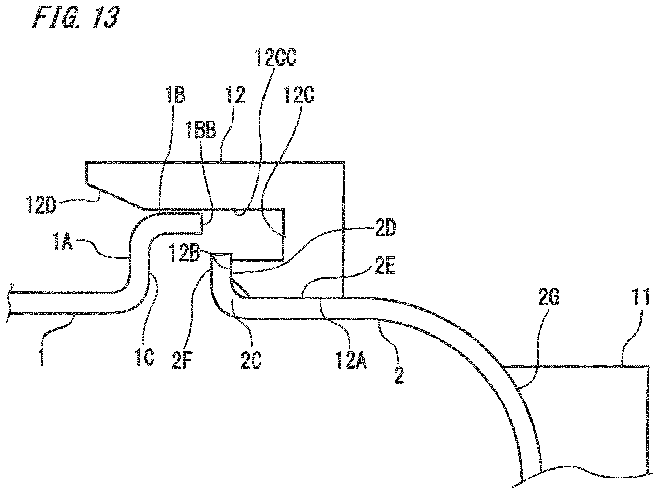

Next, before the first pressing is performed, the pressure unit 10 is moved forward, insertion of each erection portion 1A of the trunk 1 into the stepped portion 12C of the correction ring 12 is started, and the pressure unit 10 is temporarily stopped at the time when each erection portion 1A of the trunk 1 moves beyond the guiding tapered portion 12D (step ST22 in FIG. 12). FIG. 13 shows a positional relationship between the correction ring 12 and the erection portion 1A of the trunk 1 when the pressure unit 10 temporarily stops.

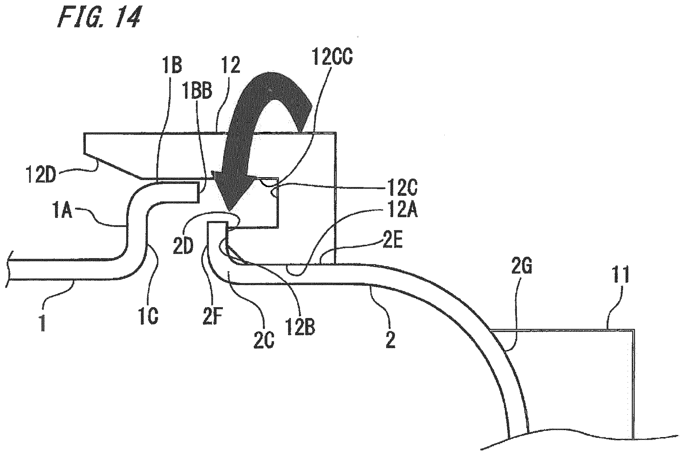

Next, in a state where each erection portion 1A of the trunk 1 has moved beyond the guiding tapered portion 12D and the pressure unit 10 has stopped, the correction ring 12 is rotated in a circumferential direction indicated by an arrow in FIG. 14. By the rotation of the correction ring 12, the shape of the trunk 1 within the correction ring 12 can be adapted to the shape of the correction ring 12 and close to a perfect circle (step ST23 in FIG. 12). As a result, the distortion of the trunk 1 is corrected. Thereafter, similarly to each embodiment described above, the first pressing step, the second pressing step, and the welding step are performed (step ST2 in FIG. 6 to step ST11 in FIG. 7) to produce a can body.

According to Embodiment 3 configured as described above, as a matter of course, the same advantageous effects as those in each embodiment described above are achieved. In addition, by causing the shape of the trunk 1 within the correction ring 12 to be adapted to the shape of the outer peripheral side surface 12CC of the stepped portion 12C of the correction ring 12 and close to a perfect circle before the first pressing, the occurrence probability that the distal end 1BB of the eave portion 1B of the erection portion 1A of the trunk 1 and the erection portion 2C of the end plate 2 will partially come into contact with each other during the first pressing, is reduced. Accordingly, it is possible to perform welding with excellent accuracy.

### Embodiment 4

In Embodiment 3 described above, the example in which the distortion of the trunk 1 is corrected by rotating the correction ring 12 has been described, but the present invention is not limited thereto, and another method will be described. Parts other than a part for correcting the distortion of the trunk 1 are the same as in Embodiment 3 described above, and thus the description thereof is omitted as appropriate.

In Embodiment 4, when each erection portion 1A of the trunk 1 moves beyond the guiding tapered portion 12D and the pressure unit 10 is temporarily stopped, the trunk 1 is bent by tapping the trunk 1 with both hands at two positions, that is, a predetermined one point on the trunk 1 inserted into the correction ring 12 and a point away in the circumferential direction by approximately 180° from the predetermined point. This operation is repeated two to three times at intervals of 60° to 90°. By so doing, the erection portion 1A of the trunk 1 is adapted to the shape of the correction ring 12. Accordingly, the gap G between the correction ring 12 and the outer diameter of the eave portion 1B of the erection portion 1A of the trunk 1 can be made uniform in the circumferential direction to some extent.

According to Embodiment 4 carried out as described above, as a matter of course, the same advantageous effects as those in each embodiment described above are achieved. In addition, the distortion of the shape of the trunk 1 within the correction ring 12 can be corrected to cause the shape of the trunk 1 to be close to a perfect circle.

Moreover, since the trunk 1 is bent by tapping the trunk 1 in a state where the trunk 1 is not pressed by the end plates 2, the tapping force can be small as compared to a state where the trunk 1 is pressed by the end plates 2, so that the working time can be shortened.

## Claims

1. A can body production apparatus (100) for joining a trunk (1) and each of end plates (2) at both sides of the trunk (1) to produce a can body, the can body production apparatus (100) comprising:
- a first correction jig (20A) and a second correction jig (20B) for supporting the end plates (2) disposed at both sides of the trunk (1), respectively;
- a correction ring (12) included in each of the first correction jig (20A) and the second correction jig (20B) and having a stepped portion (12C);
- a rotational drive unit (5A) disposed at an outer side of the first correction jig (20A);
- a pressure unit (10) disposed at an outer side of the second correction jig (20B);
- a motor for driving the pressure unit (10); and
being **characterised by**:
- a control portion (10A) being configured:
to control the pressure unit (10) while monitoring a load torque of the motor, wherein
when erection portion rear surfaces (2D) of the end plates (2) are brought into contact with lower surfaces (12B) of the stepped portions (12C) of the correction rings (12) of the first correction jig (20A) and the second correction jig (20B),
to press butted parts (16) between erection portion front surfaces (2F) at both ends of the trunk (1) and erection portion front surfaces (2F) of the end plates (2) through first pressing with a pressing force being set such that the load torque of the motor falls within a predetermined range, by controlling a position of the second correction jig (20B) and adjusting position movement of the second correction jig (20B),
to move the correction rings (12) to form spaces (17) above the butted parts (16), and press the butted parts (16) through second pressing with a pressing force being set such that the load torque of the motor falls within a predetermined range, and
to measure a number of times of an operation of adjusting the position movement during pressing the butted parts (16) through the first pressing, and
to perform a warning display when
the number of times of the operation exceeds a predetermined number of times, and wherein
the rotational drive unit (5A) is capable of integrally rotating the trunk (1), the end plates (2), and the first correction jig (20A), and the second correction jig (20B).

2. The can body production apparatus (100) according to claim 1,
wherein the control portion (10A) is adapted to perform control such that the pressing force by the second pressing is larger than the pressing force by the first pressing.

3. A can body production method being **characterised by**: using the can body production apparatus (100) according to claim 1 or claim 2, and the can body production method further comprising the following steps:
- stopping the second correction jig (20B) when the parts of the erection portions (1A) at both ends of the trunk (1) are inserted into the stepped portions (12C) of the correction rings (12) before the first pressing, while the position of the second correction jig (20B) is controlled and the position movement of the second correction jig (20B) is adjusted; and
- correcting distortion of the trunk (1) along the shape of the correction rings (12).

4. A can body production method using the can body production apparatus (100) according to claim 1 or claim 2,
the can body production method comprising joining the butted parts (16) in a state where the trunk (1), the end plates (2), the first correction jig (20A), and the second correction jig (20B) are integrally rotated by the rotational drive unit (5A).

5. The can body production method according to claim 4,
wherein each of materials of the trunk (1) and the end plates (2) is a stainless steel material, and
wherein the joining is performed by a TIG welding method.

6. The can body production method according to claim 4,
wherein each of materials of the trunk (1) and the end plates (2) is copper or a copper alloy, and
wherein the joining is performed by a brazing method using hard solder.

## Patentansprüche

1. Dosenkörper-Herstellungsvorrichtung (100) zum Verbinden von einem Rumpf (1) und von jeweiligen Endplatten (2) an beiden Seiten des Rumpfs (1), um einen Dosenkörper zu herzustellen, wobei die Dosenkörper-Herstellungsvorrichtung (100) Folgendes aufweist:
- ein erstes Korrekturwerkzeug (20A) und ein zweites Korrekturwerkzeug (20B) zum Stützen der Endplatten (2), die an beiden Seiten des Rumpfs (1) jeweils angeordnet sind;
- einen Korrekturring (12), der in jedem von dem ersten Korrekturwerkzeug (20A) und dem zweiten Korrekturwerkzeug (20B) enthalten ist, und einen gestuften Bereich (12C) aufweist;
- eine rotierende Antriebseinheit (5A), die an einer Außenseite des ersten Korrekturwerkzeugs (20A) angeordnet ist;
- eine Druckeinheit (10), die an einer Außenseite des zweiten Korrekturwerkzeugs (20B) angeordnet ist;
- einen Motor zum Antreiben der Presseinheit (10); und
**gekennzeichnet durch**
- einen Steuerungsbereich (10A), der dazu ausgebildet ist:
- die Druckeinheit (10) zu steuern, während ein Motorlastmoment des Motors überwacht wird,
- wenn Aufrichtbereichs-Rückflächen (2D) der Endplatten (2) in Kontakt mit unteren Flächen (12B) der gestuften Bereiche (12C) der Korrekturringe (12) des ersten Korrekturwerkzeugs (20A) und des zweiten Korrekturwerkzeugs (20B) gebracht werden,
- aneinanderstoßende Bereiche (16) zwischen Aufrichtbereichs-Vorderflächen (1C) an beiden Enden des Rumpfs (1) und Aufrichtbereichs-Vorderflächen (2F) der Endplatten (2) zu pressen, und zwar durch ein erstes Pressen mit einer Presskraft, die derart vorgegeben ist, dass das Motorlastmoment innerhalb eines vorbestimmten Bereichs liegt, durch Steuern der Position des zweiten Korrekturwerkzeugs (20B) und Einstellen der Positionsbewegung des zweiten Korrekturwerkzeugs (20B),
- die Korrekturringe (12) zu bewegen, um Räume (17) über den aneinanderstoßenden Bereichen (16) zu bilden, und die aneinanderstoßenden Bereiche (16) zu pressen, und zwar durch ein zweites Pressen mit einer Presskraft, die derart vorgegeben ist, dass das Motorlastmoment innerhalb eines vorbestimmten Bereichs liegt, und
- die Anzahl an Malen der Vorgänge zum Einstellen der Positionsbewegung während des Pressens der aneinanderstoßenden Bereiche (16) durch das erste Pressen zu messen, und
- eine Warnanzeige durchzuführen, wenn die Anzahl an Malen der Vorgänge eine vorbestimmte Anzahl übersteigt, und wobei die rotierende Antriebseinheit (5A) in der Lage ist, den Rumpf (1), die Endplatten (2) und das erste Korrekturwerkzeug (20A) und das zweite Korrekturwerkzeug (20B) integral miteinander zu drehen.

2. Dosenkörper-Herstellungsvorrichtung (100) nach Anspruch 1, wobei der Steuerungsbereich (10A) dazu ausgebildet ist eine Steuerung derart auszuführen, dass die Presskraft bei dem zweiten Pressen größer ist als die Presskraft bei dem ersten Pressen.

3. Dosenkörper-Herstellungsverfahren,
**gekennzeichnet durch**:
- Verwenden einer Dosenkörper-Herstellungsvorrichtung (100) nach Anspruch 1 oder 2, und
**dadurch, dass** das Dosenkörper-Herstellungsverfahren ferner folgende Schritte umfasst:
- Stoppen des zweiten Korrekturwerkzeugs (20B), wenn die Bereiche der Aufrichtbereiche (1A) an beiden Enden des Rumpfs (1) in die gestuften Bereiche (12C) der Korrekturringe (12) eingeführt sind, und zwar vor dem ersten Pressen, während die Position des zweiten Korrekturwerkzeugs (20B) gesteuert wird, und die Positionsbewegung des zweiten Korrekturwerkzeugs (20B) eingestellt wird; und
- Korrigieren einer Verzerrung des Rumpfs (1) entlang der Form der Korrekturringe (12).

4. Dosenkörper-Herstellungsverfahren, das eine Dosenkörper-Herstellungsvorrichtung (100) nach Anspruch 1 oder 2 verwendet, wobei das Dosenkörper-Herstellungsverfahren ein Verbinden der aneinanderstoßenden Bereiche (16) umfasst, und zwar in einem Zustand, in dem der Rumpf (1), die Endplatten (2), das erste Korrekturwerkzeug (20A) und das zweite Korrekturwerkzeug (20B) mittels der rotierenden Antriebseinheit (5A) integral miteinander gedreht werden.

5. Dosenkörper-Herstellungsverfahren nach Anspruch 4,
wobei jedes der Materialien des Rumpfs (1) und der Endplatten (2) ein rostfreies Stahl-Material ist, und
wobei das Verbinden mittels eines TIG Schweißverfahrens ausgeführt wird.

6. Dosenkörper-Herstellungsverfahren nach Anspruch 4,
wobei jedes der Materialien von dem Rumpf (1) und den Endplatten (2) Kupfer oder eine Kupferlegierung ist, und
wobei das Verbinden mittels eines Lötverfahrens unter Verwendung eines Hartlots ausgeführt wird.

## Revendications

1. Appareil de production de corps de caisson (100) pour joindre un tronc (1) et chacune des plaques d'extrémité (2) des deux côtés du tronc (1) pour produire un corps de caisson, l'appareil de production de corps de caisson (100) comprenant :
- un premier gabarit de correction (20A) et un second gabarit de correction (20B) pour supporter les plaques d'extrémité (2) disposés respectivement des deux côtés du tronc (1) ;
- un anneau de correction (12) inclus dans chacun du premier gabarit de correction (20A) et du second gabarit de correction (20B) et présentant une portion étagée (12C) ;
- une unité d'entraînement en rotation (5A) disposée sur un côté extérieur du premier gabarit de correction (20A) ;
- une unité de pression (10) disposée sur un côté extérieur du second gabarit de correction (20B) ;
- un moteur pour entraîner l'unité de pression (10) ; et
étant **caractérisé par** :
une portion de commande (10A) configurée :
pour commander l'unité de pression (10) tout en surveillant un couple de charge du moteur et, lorsque les surfaces arrière de portions érigées (2D) des plaques d'extrémité (2) sont amenées en contact avec les surfaces inférieures (12B) des portions étagées (12C) des anneaux de correction (12) du premier gabarit de correction (20A) et du second gabarit de correction (20B),
pour presser les portions aboutées (16) entre les surfaces frontales de portions érigées (1C) aux deux extrémités du tronc (1) et les surfaces frontales de portions érigées (2F) des plaques d'extrémité (2) par un premier pressage avec une force de pressage définie de telle sorte que le couple de charge du moteur tombe dans une plage prédéterminée, en contrôlant une position du second gabarit de correction (20B) et en ajustant le mouvement de position du second gabarit de correction (20B),
pour déplacer les anneaux de correction (12) pour former des espaces (17) au-dessus des portions aboutées (16) et presser les portions aboutées (16) par un second pressage avec une force de pressage définie de telle sorte que le couple de charge du moteur tombe dans une plage prédéterminée,
pour mesurer un nombre de fois d'une opération d'ajustement du mouvement de position pendant le pressage des pièces aboutées (16) par le premier pressage et pour effectuer un affichage d'avertissement lorsque le nombre de fois de l'opération dépasse un nombre de fois prédéterminé, et dans lequel l'unité d'entraînement en rotation (5A) est capable de mettre en rotation solidairement le tronc (1), les plaques d'extrémité (2), le premier gabarit de correction (20A) et le second gabarit de correction (20B).

2. Appareil de production de corps de caisson (100) selon la revendication 1, dans lequel la portion de commande (10A) est adaptée à effectuer une commande de telle sorte que la force de pressage par le second pressage soit plus grande que la force de pressage par le premier pressage.

3. Procédé de production de corps de caisson, **caractérisé par** :
l'utilisation de l'appareil de production de corps de caisson (100) selon la revendication 1 ou la revendication 2, le procédé de production de corps de caisson comprenant en outre les étapes consistant à :
- arrêter le second gabarit de correction (20E) lorsque les parties des portions érigées (1A) aux deux extrémités du tronc (1) sont insérées dans les portions étagées (12C) des anneaux de correction (12) avant le premier pressage, tandis que la position du second gabarit de correction (20B) est contrôlée et que le mouvement de position du second gabarit de correction (20B) est ajusté ; et
- corriger la déformation du tronc (1) le long de la forme des anneaux de correction (12).

4. Procédé de production de corps de caisson utilisant l'appareil de production de corps de caisson (100) selon la revendication 1 ou la revendication 2,
le procédé de production de corps de caisson comprenant l'étape consistant à joindre les portions aboutées (16) dans un état où le tronc (1), les plaques d'extrémité (2), le premier gabarit de correction (20A) et le second gabarit de correction (20B) sont mis en rotation solidairement par l'unité d'entraînement en rotation (5A).

5. Procédé de production de corps de caisson selon la revendication 4,
dans lequel chacun des matériaux du tronc (1) et des plaques d'extrémité (2) est un matériau en acier inoxydable et
dans lequel la jonction est réalisée par un procédé de soudage TIG.

6. Procédé de production de corps de caisson selon la revendication 4,
dans lequel chacun des matériaux du tronc (1) et des plaques d'extrémité (2) est du cuivre ou un alliage de cuivre et
dans lequel la jonction est réalisée par un procédé de brasage utilisant une brasure forte.
